**Europäisches Patentamt**

**European Patent Office**

**Office européen des brevets**

(19)

(11) Veröffentlichungsnummer : **0 379 160 B1**

(12)

# EUROPÄISCHE PATENTSCHRIFT

(45) Veröffentlichungstag der Patentschrift :
**17.06.92 Patentblatt 92/25**

(51) Int. Cl.⁵ : **B60T 17/00,** F01N 1/08,
F16L 55/027

(21) Anmeldenummer : **90100877.1**

(22) Anmeldetag : **17.01.90**

(54) **Schalldämpfer.**

(30) Priorität : **18.01.89 DE 3901335**

(43) Veröffentlichungstag der Anmeldung :
**25.07.90 Patentblatt 90/30**

(45) Bekanntmachung des Hinweises auf die
Patenterteilung :
**17.06.92 Patentblatt 92/25**

(84) Benannte Vertragsstaaten :
**AT DE FR GB IT**

(56) Entgegenhaltungen :
**EP-A- 0 123 843
DE-A- 2 933 105
DE-A- 3 327 902
DE-U- 8 011 047
FR-A- 1 145 543
FR-A- 2 451 530
US-A- 4 375 841**

(73) Patentinhaber : **KNORR-BREMSE AG
Moosacher Strasse 80 Postfach 401060
W-8000 München 40 (DE)**

(72) Erfinder : **Juhasz, Ferenc
Waldfeldweg 1
W-8081 Althegnenberg (DE)**
Erfinder : **Melcher, Gernot
Einsteinstrasse 149
W-8000 München 80 (DE)**
Erfinder : **Tiedge, Heinz
Riesstrasse 84
W-8000 München 50 (DE)**
Erfinder : **Unger, Hans
St. Benediktstrasse 7
W-8044 Unterschleissheim (DE)**

EP 0 379 160 B1

**Beschreibung**

Die Erfindung betrifft einen Schalldämper zum Dämpfen des Ausströmgeräusches von Druckluft aus Druckluftgeräten, insbesondere Druckluftbremsgeräten und Fahrzeugen, mit in einem an eine Auslaßöffnung des Druckluftgerätes ansetzbaren Gehäuse angeordneten Lochscheiben, wobei das topfartige, in einen Gehäuseboden und einen Gehäusemantel gliederbare Gehäuse am Gehäuseboden einen Anschlußstutzen aufweist, sich im Innenraum des Gehäuses mit Abstand zum Bodenabschnitt zwei zueinander axial versetzte Lochscheiben mit jeweils einer Vielzahl von kleinquerschnittigen Durchbrechungen befinden und eine der Lochscheiben an ihrem Außenrand einen axial auskragenden Mantelabschnitt aufweist.

Ein derartiger Schalldämpfer ist aus der DE-OS 29 33 105 bekannt. Die anschlußstutzenseitige Lochscheibe ist dabei an ihrem Außenrand mit einem axial beidseitig auskragenden Mantelabschnitt versehen, mit welchem sie zwischen einer Gehäuseschulter und einer zu ihrem Scheibenbereich in Abstand gehaltenen Stahlwolle-Einlage gehalten ist; die Stahlwolle-Einlage ist andererseits durch eine zweite, zur ersten ungleichen Lochscheibe gehaltert, die zwischen einer Innenschulter des Gehäuses und einen Klemmring eingespannt ist. Die völlig offene Einmündung des Anschlußstutzens in das topfartige Gehäuse läßt bei diesem bekannten Schalldämpfer eine über die Fläche ungleichmäßige Beaufschlagung zumindest der anschlußstutzenseitigen Lochscheibe erwarten. Die beiden Lochscheiben weisen - jeweils für sich betrachtet - über ihre Fläche verteilt Durchbrechungen nur gleichen Querschnittes auf; zum Ablassen verunreinigter Luft ist zum Vermeiden von betriebsgefährdenden Verstopfungen dieser Querschnitt an die Größe der Verunreinigungs-Partikel anzupassen, muß also durchwegs relativ groß gewählt werden, wodurch seine Wirkung vermindert wird. Die unterschiedliche Ausbildung der beiden Lochscheiben sowie die mehrfache Schulteranordnung im Gehäuse zum Haltern der Lochscheiben verteuert den Schalldämpfer und dessen Wartung.

Die bestehenden Vorschriften hinsichtlich der Geräuschentwicklung, welche Druckluftbremsgeräte von Fahrzeugen maximal abgeben dürfen, werden mitunter dahingehend geändert, daß nur noch verringerte Geräuschabgaben zulässig sind. Aufgrund dieser Änderungen kann es zweckmäßig oder erforderlich werden, vorhandene Druckluftbremsgeräte nachträglich oder nach bestehenden Konstruktionen zu fertigende Druckluftbremsgeräte zusätzlich mit einem Schalldämpfer zu versehen, damit diese den verringerten Schallemissionswerten genügen. Dabei ist zu berücksichtigen, daß es Druckluftbremsgeräte mit Auslaßöffnungen gibt, aus welchen im wesentlichen nur nicht verunreinigte Luft zur Atmosphäre abströmt, daß es jedoch auch Druckluftbremsgeräte, wie beispielsweise Lufttrockner, gibt, aus deren Auslaßöffnung, bei Lufttrocknern deren Ablaßstutzen, gegebenenfalls mit Verunreinigungen wie Öl oder Ölkohle versetzte Luft abströmt. Einen derartigen Lufttrockner mit bereits integriertem, verschärften Schallemissionsforderungen möglicherweise nicht mehr genügendem Schalldämpfer vor seinem Ablaßstutzen zeigt beispielsweise die EP-B- 123 843.

Aus der DE-OS 33 27 902 ist ein gattungsfremder Schalldämpfer bekannt, bei welchem der Anschlußstutzen durch einen entsprechenden Einsatz derart ausgebildet ist, daß die einströmende Luft durch eine trichterartige, in axialer Richtung liegender Verengung größtenteils zum Durchströmen radialer Öffnungen des Einsatzes gezwungen wird, wodurch ein annähernd gleichmäßiges Beaufschlagen der Oberfläche eines Gestrick-Einsatzkörpers erzwungen wird. Nur ein geringer, evtl. Schmutzpartikel fördernder Luftstrom durchströmt ohne Umlenkung die trichterartige Verengung und gelangt durch einen zentralen Kanal im Gestrick-Einsatzkörper zu einer diesen abstützenden, im Gehäuse gehalterten und als Lochscheibe ausgebildeten Bodenplatte. Dieser Schalldämpfer ist prinzipiell nur mit dem Gestrick-Einsatzkörper betreibbar, der bei bestimmten Verunreinigungen der auszulassenden Luft, z.B. kleine, noch ölbehaftete Ölkohlepartikel, trotz des zentralen, weiten Partikeldurchlasses zum raschedn Zusetzen neigt.

Aus dem DE-Gbm 80 11 047 ist ein weiterer, gattungsfremder Schalldämpfer bekannt, bei welchem in das Gehäuse mehrere Sintermetall-Filterscheiben ggf. gleicher Ausbildung unter Zwischenlage von Abstandshülsen eingeknöpft sind. Diese Schalldämpfer sind nur für das Auslassen von reiner Druckluft, keinesfalls jedoch von öl- oder ölkohlehaltiger Luft geeignet.

Es ist Aufgabe der Erfindung, einen Schalldämpfer der eingangs genannten Art zu schaffen, welcher bei einfachem Aufbau aus nur wenigen, billigen Teilen sowohl zur Nachrüstung an vorhandenen Druckluftgeräten, insbesondere Druckluftbremsgeräten, als auch zur Neugeräteausstattung von bestehenden Konstruktionen entsprechenden Geräten und auch für neu zu entwickelnde Geräte geeignet ist. Der Schalldämpfer soll dabei ohne Schwierigkeiten derart ausstattbar sein, daß er ohne Gefahr von Verstopfungen und damit Erhöhung des Strömungswiderstandes für die abzulassende Luft an Auslaßöffnungen verwendbar ist, durch welche gegebenenfalls mit Verunreinigungen, wie dem erwähnten Öl oder der Ölkohle, versetzte Luft abströmt, wie auch unter Steigerung seiner Wirkung an Auslaßöffnungen verwendbar ist, durch welche nur unwesentlich verunreinigte Luft abströmt.

Diese Aufgabe wird nach der Erfindung gelöst durch die Kombination der Merkmale, daß

– der Anschlußstutzen umgekehrt topfartig ausgebildet ist und sich mit seinem Bodenabschnitt im Innenraum des Gehäuses befindet, wobei sich im Übergangsbereich vom Wandungs- zum Bodenabschnitt des Anschlußstutzens über den Umfang zumindest annähernd gleichmäßig verteilt mehrere Durchbrechungen befinden, welche vom Innenraum des Anschlußstutzens zu einem dem Gehäuseboden nahen Bereich des Innenraumes des Gehäuses führen,

– jede der beiden gleichartig ausgebildeten Lochscheiben einen einseitig axial auskragenden Mantelabschnitt aufweist,

– die beiden Lochscheiben zueinander spiegelbildlich, mit aneinander anliegenden Stirnflächen der Mantelabschnitte und in axialem Abstand befindlichen Scheibenbereichen, in einer ringnutartigen Ausnehmung an der Innenfläche des Gehäusemantels gehaltert sind, und

– die Lochscheiben in ihren Scheibenbereichen bezogen auf die Vielzahl der kleinquerschnittigen von einer geringen Anzahl großschnittiger Durchbrechungen durchbrochen sind.

Ein diese Merkmale aufweisender Schalldämpfer besteht somit, von einer evtl. erforderlichen Haltefeder für seinen Anschluß abgesehen, lediglich aus drei Teilen, von welchen zudem zwei Teile gleichartig sind. Die Lochscheiben mit ihrem kleinquerschnittigen Durchbrechungen teilen dabei den abzulassenden Luftstrom in viele Teilströme auf, wodurch er breitflächig auf die Atmosphärenluft auftrifft. Zugleich sorgen die wenigen großquerschnittigen Durchbrechungen dafür, daß mit der abzulassenden Luft geförderte Verunreinigungen zum einen den Schalldämpfer durchströmen können, zum anderen jedoch, falls diese Verunreinigungen einen Teil der kleinquerschnittigen Durchbrechungen verstopfen sollten, die abzulassende Luft durch die großquerschnittigen Durchbrechungen ohne wesentliche Steigerung des Ausströmwiderständen abströmen kann.

Die Unteransprüche zeigen nach der weiteren Erfindung vorteilhafte Ausgestaltungsmöglichkeiten für einen derart ausgebildeten Schalldämpfer auf. Falls der Schalldämpfer an Auslaßöffnungen verwendet wird, aus welchen nur unwesentlich verunreinigte Luft abströmt, so kann es nach Anspruch 8 besonders zweckmäßig sein, in den Raum zwischen den Scheibenbereichen der beiden Lochscheiben einen von Mikroluftkanälen durchsetzten, aus Metallgestrich, Schaumstoff oder dgl. bestehendenden Dämpfungskörper einzusetzen; dieser Dämpfungskörper, welcher sich bei Durchströmen mit verunreinigter Luft zusetzen würde, kann die Dämpfungswirkung des Schalldämpfers beachtlich steigern.

In der Zeichnung sind Ausführungsbeispiel für nach der Erfindung ausgebildete Schalldämpfer dargstellt, und zwar zeigt

Fig.1 ein Schnittbild einer ersten Ausführungsform, welche für verunreinigte Luft geeinget ist,

Fig.2 Halbbilder einer Lochscheibe in Aufsicht und im Querschnitt in vergrößertem Maßstab und

Fig.3 eine zweite Ausführungsform des Schalldämpfers, welche für nur unwesentlich verunreinigte Luft geeignet ist.

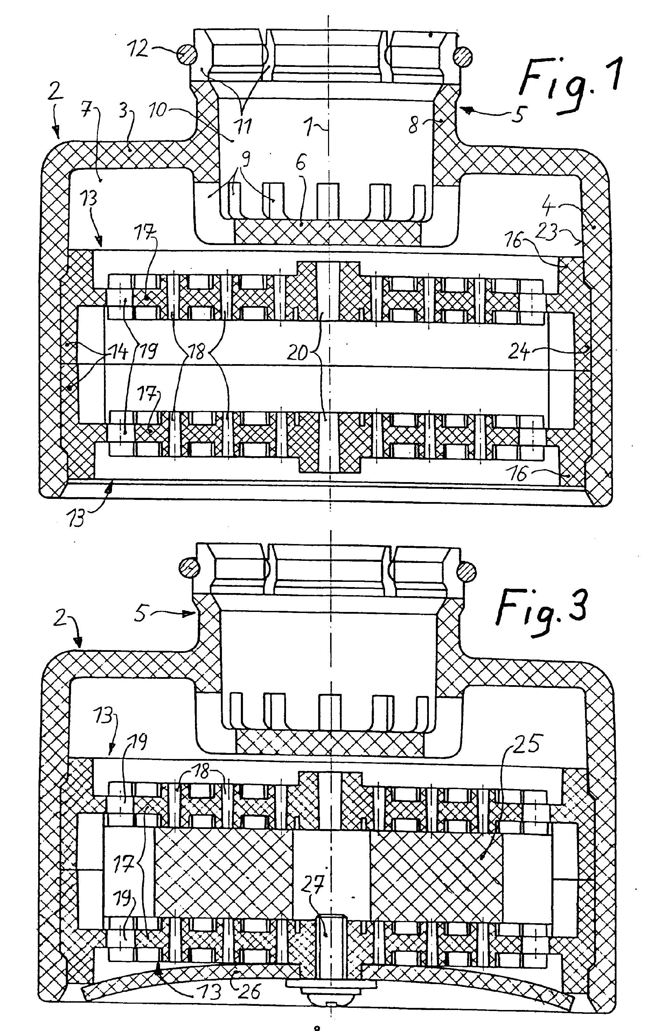

Gemäß Fig. 1 ist der Schalldämpfer im wesentlichen rotationssymmetrisch um eine Achse 1 gestaltet, er kann jedoch selbstverständlich auch eine andere, beispielsweise quadratische Grundrißform aufweisen. Der Schalldämpfer weist ein topfartiges Gehäuse 2 auf, welches vorzugsweise aus Kunststoff gefertigt ist und welches in einen Gehäuseboden 3 und einen Gehäusemantel 4 gliederbar ist. In den Gehäuseboden 3 ist ein umgekehrt topfartig ausgestalteter Anschlußstutzen 5 eingeformt, dessen Bodenabschnitt 6 sich im Innenraum 7 des Gehäuses 1 befindet. Im Übergangsbereich des Bodenabschnittes 6 zum Wandungsabschnitt 8 des Anschlußstutzens 5 befinden sich über den Umfang zumindest annähernd gleichmäßig verteilt mehrere Durchbrechungen 9, welche vom Innenraum 10 des Anschlußstutzens 5 zu einem dem Gehäuseboden 3 nahen Bereich des Innenraumes 7 des Gehäuses 1 führen. Der Wandungsabschnitt 8 des Anschlußstutzens 5 kragt vom Gehäuseboden 3 nach außen aus und endet mit einer zum Anschluß an Auslaßöffnungen von Druckluftgeräten geeigneten Form; im Ausführungsbeispiel ist der Endabschnitt mit mehreren Schlitzen 11 versehen und durch einen Federring 12 radial verspannt, wodurch sich eine große, radiale Elastizität zum Anschluß an mit großen Fertigungstoleranzen gefertigte Auslaßöffnungen ergibt.

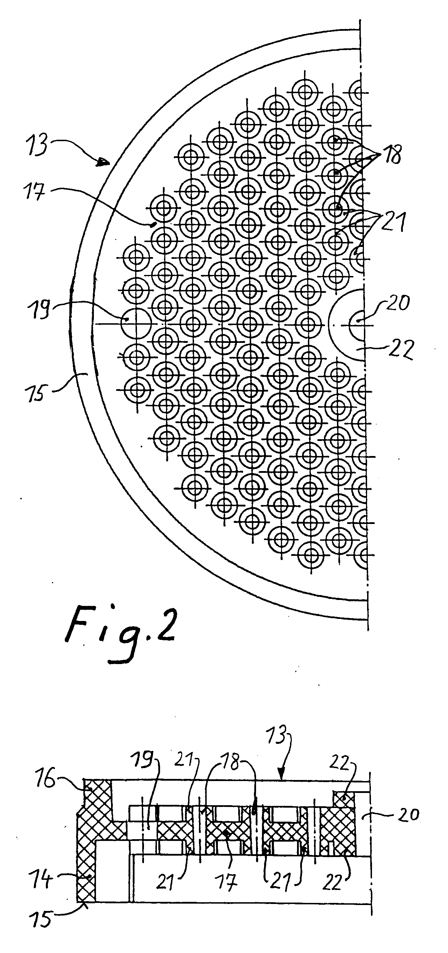

Im Innenraum 7 des Gehäuses 1 befinden sich mit Abstand zum Bodenabschnitt 6 zwei zueinander axial versetzte, gleichartig ausgebildete Lochscheiben 13. Jede Lochscheibe 13 weist gemäß Fig.2 an ihrem Außenrand einen einseitig axial aukragenden Mantelabschnitt 14 auf, welcher mit einer Stirnfläche 15 endet. Andererseits kann die Lochscheibe 13 an ihrem Außenrand einen kurzen, ringartigen Ansatz 16 aufweisen, welcher einen etwas geringeren Außendurchmesser als der Mantelabschnitt 14 besitzt. In ihrem Scheibenbereich 17 ist die Lochscheibe 13 von einer Vielzahl von kleinquerschnittigen Durchbrechungen 18 und in ihrem Randbereich von zwei diametral gegenüberliegenden, demgegenüber großquerschnittigen Durchbrechungen 19 durchbrochen. Weiterhin ist eine zentrale Durchbrechung 20 vorgesehen, deren Querschnitt demjenigen der großquerschnittigen Durchbrechungen 19 entspricht, jedoch auch größer sein kann. Die Lochscheibe 13 weist in ihrem Scheibenbereich 17 beidseitig Paare von rohrstutzenartigen Ansätzen 21 auf, in deren jedem eine kleinquerschnittige Durchbrechung 18 verläuft. Ein weiteres Paar von rohrstutzenartigen Ansätzen 22 umgibt die zentrale Durchbrechung 20. Die Lochscheibe 17 ist vorzugsweise aus Kunststoff gefertigt.

Gemäß Fig.1 weist das Gehäuse 2 an der Innenfläche 23 seines Gehäusemantels 4 eine ringnutartige Ausnehmung 24 auf, in welche zwei Lochscheiben 13 mit ihren Mantelabschnitten 14 zueinander spiegelbildlich eingeknüpft und damit gehaltert sind; die Mantelabschnitte 14 der beiden Lochscheiben 13 sind dabei einander zugewandt und liegen mit ihren Stirnflächen 15 aneinander an, so daß sich die Scheibenbereiche 17 beider Lochscheiben 13 in axialem Abstand zueinander befinden. Die Ansätze 16 der Lochscheiben 13 liegen an Abschnitten der Innenfläche 23 an, welche der Ausnehmung 24 benachbart sind.

Der so ausgebildete Schalldämpfer ist geeignet, aus Auslaßöffnungen abströmende, mit Verunreinigungen belastete Luft in ihrem Ausströmgeräusch zu dämpfen. Die auströmende Luft gelangt durch den Anschlußstutzen 5 und die Durchbrechungen 9 annähernd gleichmäßig verteilt in den Innenraum 7 oberhalb der oberen Lochscheibe 13, durchströmt von dort die Durchbrechungen 18,19 und 20 beider Lochscheiben 13, wobei sie im Zwischenraum zwischen den beiden Scheibenbereichen 17 nochmals beruhigt wird, und gelangt in viele, kleine Teilstrahlen aufgeteilt durch die untere Lochscheibe 13 zur Atmosphäre. Die von dieser Luft mitgeführten Verunreinigungen können dabei durch die großquerschnittigen Durchbrechungen 19 und 20 zur Atmosphäre gelangen, sie werden dabei von den größeren Luftstromteilmengen durch diese großquerschnittigen Durchbrechungen gerissen. Sollten diese Verunreinigungen jedoch einen Teil der kleinquerschnittigen Durchbrechungen 18 verstopfen, so kann die abströmende Druckluft immer noch durch die großquerschnittigen Durchbrechungen 19 und 20 ohne wesentlichen Strömungswiderstand zur Atmosphäre abströmen, ein Ausfall des Druckluftgerätes durch Druckrückstau von der Auslaßöffnung ist also nicht zu befürchten.

Falls der Schalldämpfer an einem Druckluftgerät betrieben werden soll, welches durch seine Auslaßöffnung nur unwesentlich verunreinigte Luft abläßt, so ist es zweckmäßig, gemäß Fig.3 zwischen die Scheibenbereiche 17 der beiden Lochscheiben 13 einen von Mikroluftkanälen durchsetzten Dämpfungskörper 25 einzusetzen, der aus einem Metallgestrick, einem Schaumstoff oder dgl. besteht. Dabei kann es zweckmäßig sein, wenn der Dämpfungskörper 25 sich nur über diejenigen Scheibenbereiche 17 erstreckt, welche von den kleinquerschnittigen Durchbrechungen 18 durchsetzt sind, die großquerschnittigen Durchbrechungen 19 und 20 jedoch freiläßt: Hierdurch wird erreicht, daß bei verstärkter Dämpfungswirkung durch den Dämpfungskörper 25 doch stets zumindest die großquerschnittigen Durchbrechungen 19 als Notentlüftungswege bei einem Zusetzen der kleinquerschnittigen Durchbrechungen 18 oder der Mikroluftkanäle des Dämpfungskörpers 25 frei und offen bleiben, die Entlüftungsfunktion durch den Schalldämpfer also nicht beeinträchtigt wird. Im weiteren ist gemäß Fig.3 eine Scheibe 26 aus elastisch verformbaren Material vorgesehen, welche die Außenseite der dem Anschlußstutzen 5 abgewandten Lochscheibe 13 abdeckt und so vor Verschmutzungen von außen und dem Eindringen vor Spritzwasser schützt. Diese Scheibe 26 liegt an ihrem Rand lose auf und ist lediglich in ihrem zentralen Bereich mittels eines in die zentrale Durchbrechung 20 dieser unteren Lochscheibe 13 eingreifenden Halteelementes 27 gehaltert, das Halteelement 27 ist gemäß Fig.3 als Schraube ausgebildet, es kann auch ein Klemmstift oder dgl. sein. Die aus dem Schalldämpfer auströmende Luft hebt die Scheibe 26 unter deren elastischer Verformung von innen nach außen zunehmend von den Mündungen der Durchbrechungen 18 der unteren Lochscheibe 13 ab, die Luft strömt am Außenrand der Scheibe zur Atmosphäre ab. Im übrigen entspricht der Schalldämpfer nach Fig.3 demjenigen nach Fig.1.

**Bezugszeichenliste**

| 1 | Achse |
| 2 | Gehäuse |
| 3 | Gehäuseboden |
| 4 | Gehäusemantel |
| 5 | Anschlußstutzen |
| 6 | Bodenabschnitt |
| 7 | Innenraum |
| 8 | Wandungsabschnitt |
| 9 | Durchbrechung |
| 10 | Innenraum |
| 11 | Schlitz |
| 12 | Federring |
| 13 | Lochscheibe |
| 14 | Mantelabschnitt |
| 15 | Stirnfläche |

EP 0 379 160 B1

16     Ansatz

17     Scheibenbereich

18     Durchbrechung (klein)

19     Durchbrechung (groß)

20     Durchbrechung (zentral)

21     Ansatz

22     Ansatz

23     Innenfläche

24     Ausnehmung

25     Dämpfungkörper

26     Scheibe

27     Halteelement


**Patentansprüche**

1. Schalldämpfer zum Dämpfen des Ausströmgeräusches von Druckluft aus Druckluftgeräten, insbesondere Druckluftbremsgeräten von Fahrzeugen, mit in einem an eine Auslaßöffnung des Druckluftgerätes ansetzbaren Gehäuse (2) angeordneten Lochscheiben (13), wobei das topfartige, in einen Gehäuseboden (3) und einen Gehäusemantel (4) gliederbare Gehäuse (2) am Gehäuseboden (3) einen Anschlußstutzen (5) aufweist, sich im Innenraum (7) des Gehäuses (2) mit Abstand zum Bodenabschnitt (3) zwei zueinander axial versetzte Lochscheiben (13) mit jeweils einer Vielzahl von kleinquerschnittigen Durchbrechungen (18) befinden und eine der Lochscheiben (13) an ihrem Außenrand einen axial auskragenden Mantelabschnitt (14) aufweist, gekennzeichnet durch die Kombination der Merkmale, daß
    – der Anschlußstutzen umgekehrt topfartig ausgebildet ist und sich mit seinem Bodenabschnitt (6) im Innenraum (7) des Gehäuses (2) befindet, wobei sich im Übergangsbereich vom Wandungs- (8) zum Bodenabschnitt (6) des Anschlußstutzens (5) über den Umfang zumindest annähernd gleichmäßig verteilt mehrere Durchbrechungen (9) befinden, welche vom Innenraum (10) des Anschlußstutzens (5) zu einem dem Gehäuseboden (3) nahen Bereich des Innenraumes (7) des Gehäuses (2) führen,
    – jede der beiden gleichartig ausgebildeten Lochscheiben (13) einen einseitig axial auskragenden Mantelabschnitt (14) aufweist,
    – die beiden Lochscheiben (13) zueinander spiegelbildlich, mit aneinander anliegenden Stirnflächen (15) der Mantelabschnitte (14) und in axialem Abstand befindlichen Scheibenbereichen (17), in einer ringnutartigen Ausnehmung (24) an der Innenfläche (23) des Gehäusemantels (4) gehalten sind, und
    – die Lochscheiben (13) in ihren Scheibenbereichen (17) bezogen auf die Vielzahl der kleinquerschnittigen von einer geringen Anzahl großschnittiger Durchbrechungen (18;19) durchbrochen sind.

2. Schalldämpfer nach Anspruch 1, dadurch gekennzeichnet, daß die vorzugsweise aus Kunststoff bestehenden Lochscheiben (13) in die ringnutartige Ausnehmung (24) des ebenfalls vorzugsweise aus Kunststoff bestehenden Gehäuses (2) eingeknüpft sind.

3. Schalldämpfer nach Anspruch 1 oder 2, dadurch gekennzeichnet, daß je Lochscheibe (13) zwei großquerschnittige Durchbrechungen (19) vorgesehen sind, die nahe des Scheibenbereich-Außenrandes an diametral gegenüberliegenden Stellen angeordnet sind.

4. Schalldämpfer nach Anspruch 1, 2 oder 3, dadurch gekennzeichnet, daß die Lochscheiben (13) eine zentrale Durchbrechung (20) mit einem zumindest denjenigen der großquerschittigen Durchbrechungen (19) erreichenden Querschnitt aufweisen.

5. Schalldämpfer nach Anspruch 4, dadurch gekennzeichnet, daß der Scheibenbereich (17) der Lochscheiben (13) beidseitig Paare von rohrstutzenartigen Ansätzen (21) aufweist, in deren jedem eine kleinquerschnittige Durchbrechung (18) verläuft.

6. Schalldämpfer nach Anspruch 5, dadurch gekennzeichnet, daß die zentrale Durchbrechung (20) in einem weiteren Paar von rohrstutzenartigen Ansätzen (22) des Scheibenbereiches (17) verläuft.

7. Schalldämpfer nach einem oder mehreren der vorstehenden Ansprüche 1 bis 6, gekennzeichnet durch seine Verwendung an einer zusätzlich zu Luft Verunreinigungen, wie Öl oder Ölkohle, abgebenden Auslaßöffnung, insbesondere am Ablaßstutzen eines gegebenenfalls einen weiteren, integrierten Schalldämpfer bekannter Bauart aufweisenden Lufttrockners.

8. Schalldämpfer nach einem oder mehreren der Ansprüche 1 bis 6, dadurch gekennzeichnet, daß sich im

5

Raum zwischen den Scheibenbereichen (17) der beiden Lochscheiben (13) ein von Mikroluftkanälen durchsetzter, aus Metallgewebe, Schaumstoff oder dgl. bestehender Dämpfungskörper (25) befindet.

9. Schalldämpfer nach Anspruch 8, dadurch gekennzeichnet, daß sich an der Außenseite der dem Anschlußstutzen (5) abgewandten Lochscheibe (13) eine die Mündungen der Durchbrechungen (18;19) abdeckende, elastisch durch Verformung abhebbare Scheibe (26) befindet, welche nur in ihrem zentralen Bereich mittels eines in die zentrale Durchbrechung (20) der Lochscheibe (13) eingreifenden Haltelementes (27) gehaltert ist.

10. Schalldämpfer nach Anspruch 8 oder 9, gekennzeichnet durch seine Verwendung an einer nur unwesentlich verunreinigte Luft abgebenden Auslaßöffnung.

## Claims

1. Silencer for attenuating the discharge noise of compressed air from compressed air units, in particular compressed air braking units of vehicles, having perforated discs (13) arranged in a housing (2) which can be fixed onto an outlet opening of the compressed air unit, in which the pot-type housing (2), which can be divided into a housing base (3) and a housing casing (4), has a connection piece (5) on the housing base (3), two perforated discs (13), which are axially offset relative to each other, are located in the interior space (7) of the housing (2) at a distance from the base section (3), having, in each case, a plurality of perforations (18) with small cross section, and one of the perforated discs (13) has on its outer edge an axially projecting casing section (14), characterised by the combination of the features that
   – the connection piece is formed inversely in the manner of a pot and is located with its base section (6) in the interior space (7) of the housing (2), there being located in the region of transition from the wall section (8) to the base section (6) of the connection piece (5) and at least substantially evenly distributed over the periphery several perforations (9) which lead from the interior space (10) of the connection piece (5) to a region of the interior space (7) of the housing (2) close to the housing base (3);
   – each of the two perforated discs (13) formed in a similar manner has a casing section (14) which projects axially on the one side;
   – the two perforated discs (13) are held so as to be mirror-inverted in relation to each other, with adjacent faces (15) of the casing sections (14) and disc regions (17) which are axially spaced. apart, in an annular groove-type recess (24) on the inner face (23) of the housing casing (4); and
   – the perforated discs (13) are perforated in their disc regions (17), relative to the plurality of perforations (18) with small cross section, by a small number of perforations (19) with large cross section.

2. Silencer according to claim 1, characterised in that the perforated discs (13), which are preferably made of plastics material, are fastened into the annular groove-type recess (24) of the housing (2) which likewise is preferably made of plastics material.

3. Silencer according to claim 1 or 2, characterised in that two perforations (19) with large cross section are provided per perforated disc (13) which perforations (19) are arranged close to the outer edge of the disc region at diametrically opposing locations.

4. Silencer according to claim 1, 2 or 3, characterised in that the perforated discs (13) have a central perforation (20) with a cross section which equals at least that of the perforations (19) with large cross section.

5. Silencer according to claim 4, characterised in that the disc region (17) of the perforated discs (13) on both sides has pairs of tube-connector-type extensions (21) in each of which there extends a perforation (18) with small cross section.

6. Silencer according to claim 5, characterised in that the central perforation (20) extends in a further pair of tube-connector-type extensions (22) of the disc region (17).

7. Silencer according to one or several of the preceding claims 1 to 6, characterised by its use at an outlet opening which in addition to air emits impurities, such as oil or oil carbon, in particular at the outlet connection piece of an air dryer which, if applicable, has a further integrated silencer of the known type of construction.

8. Silencer according to one or several of the claims 1 to 6, characterised in that located in the space between the disc regions (17) of the two perforated discs (13) there is an attenuating element (25) through which micro-air channels pass and which is made of metallic woven fabric, foamed material or the like.

9. Silencer according to claim 8, characterised in that on the outside of the perforated disc (13) which is remote from the connection piece (5) there is a disc (26) which covers the openings of the perforations (18; 19) and can be raised elastically as a result of deformation and which is held only in its central region by means of a holding element (27) which engages into the central perforation (20) of the perforated disc (13).

10. Silencer according to claim 8 or 9, characterised by its use at an outlet opening which emits only slightly contaminated air.

**Revendications**

1. Silencieux pour amortir le bruit d'échappement d'air comprimé provenant d'appareils à air comprimé, en particulier de dispositifs ou d'appareils de freinage à air comprimé de véhicules, avec des disques perforés (13) disposés dans un boîtier (2) susceptible d'être appliqué à une ouverture d'évacuation de l'appareil à air compirmé, ledit boîtier (2), qui est susceptible d'être subdivisé en un fond de boîtier (3) et en une enveloppe de boîtier (4), comportant dans le fond de boîtier (3) un embout de raccordement (5), alors que dans l'espace intérieur (7) du boîtier (2), et à distance de la section de fond (3), sont prévus, avec décalage axial, deux disques perforés (13) comportant chacun une pluralité d'ouvertures (18) de faible section transversale, et que l'un des disques perforés (13) présente à sa périphérie extérieure une section d'enveloppe (14) en débordement axial, caractérisé par la combinaison des particularités suivantes:
   – l'embout de raccordement est réalisé à la manière d'un pot inversé et se situe, avec sa section de fond (6) dans l'espace intérieur (7) du boîtier, la zone de transition entre la section de paroi (8) et la section de fond (6) de l'embout de raccordement (5), présentant plusieurs ouvertures (9) réparties au moins avec une distribution uniforme sur la périphérie, lesdites ouvertures (9) menant de l'espace intérieur (10) de l'embout de raccordement (5) à une zone de l'espace intérieur (7) du boîtier (2), qui est proche du fond de boîtier (3),
   – chacun des deux disques perforés (13) qui sont d'un même genre, présente sur un côté une section d'enveloppe (14) en débordement axial,
   – les deux disques perforés (13) sont montés, symétriquement entre eux, avec les surfaces frontales (15) des sections d'enveloppes (14) en contact entre elles et avec des zones de disque (17) situées à distance axiale, dans une gorge annulaire (24) ménagée dans la surface intérieure (23) de l'enveloppe de boîtier (4), et
   – les disques perforés (13) sont perforés, dans leurs zones (17) formant disques proprement dits, par des ouvertures (18 ; 19) de forte section transversale et dont le nombre est faible comparativement au grand nombre d'ouvertures de faible section transversale.

2. Silencieux selon la revendication 1, caractérisé par le fait que les disques perforés (13), qui sont, de préférence, constitués par une matière plastique, sont enclenchés ou encliquetés dans la gorge (24) de forme annulaire du boîtier (2) qui est également, et de préférence, constituée avec une matière plastique.

3. Silencieux selon la revendication 1 ou 2, caractérisé par le fait qu'il est prévu, par disque perforé (13), deux ouvertures (19) de section transversale importante, qui sont disposées en des emplacements diamétralement opposés du bord ou de la périphérie extérieure de la zone formant disque proprement dit.

4. Silencieux selon la revendication 1, 2 ou 3, caractérisé par le fait que les disques perforés (13) présentent une ouverture centrale (20) d'une section qui atteint au moins la section des ouvertures (19) à grande section transversale.

5. Silencieux selon la revendication 4, caractérisé par le fait que la zone (17), formant disque proprement dit, des disques perforés (13), comporte, de part et d'autre, des paires ??? (21) en forme d'embouts tubulaires dans chacun desquels s'étend une ouverture (18) de faible section transversale.

6. Silencieux selon la revendication 5, caractérisé par le fait que l'ouverture centrale (20) s'étend dans une autre paire d'appendices (22) de la zone (17) formant le disque proprement dit, lesquels appendices (22) se présentent sous la forme d'un embout tubulaire.

7. Silencieux selon une ou plusieurs des revendications précédentes 1 à 6, caractérisé par sa mise en oeuvre dans une ouverture supplémentaire à celle émettant les impuretés de l'air, telles que de l'huile ou de la calamine, en particulier à l'embout d'évacuation ou d'échappement d'un sécheur d'air qui comporte également un silencieux intégré supplémentaire d'un genre de construction connue.

8. Silencieux selon une ou plusieurs des revendications 1 à 6, caractérisé par le fait qu'il est prévu, dans l'espace entre les zones de disques (17) des deux disques perforés (13), un corps d'atténuation (25) traversé par des microcanaux d'air, et constitué par un tissu métallique, par un produit alvéolaire ou similaire.

9. Silencieux selon la revendication 8, caractérisé par le fait qu'il est prévu sur le côté extérieur du disque perforé (13) qui est éloigné de l'embout du raccordement (5), un disque (26) qui recouvre les embouchures des ouvertures (18, 19) et qui est susceptible d'être dégagé par déformation, lequel disque (26) est monté, seulement dans sa partie centrale, à l'aide d'un élément de support (27) qui pénètre dans l'ouverture centrale (20) du disque perforé (13).

10. Silencieux selon la revendication 8 ou 9, caractérisé par sa mise en oeuvre avec une ouverture d'évacuation émettant de l'air pollué de façon insignifiante.

Fig.1

Fig.3

Fig.2